# EUROPEAN PATENT SPECIFICATION

(11) **EP 1 451 622 B1**
(45) Date of publication and mention of the grant of the patent: **01.03.2006**
(21) Application number: 02781725.3
(22) Date of filing: 06.12.2002
(51) Int. Cl.: G02B 6/12

(54) **METHOD OF PRODUCING PLANAR WAVEGUIDES**
HERSTELLUNGSVERFAHREN VON PLANAREN WELLENLEITERN
PRODUCTION DE GUIDES D'ONDES

(30) Priority: 06.12.2001 IE 20011043
(43) Date of publication of application: 01.09.2004
(73) Proprietor: University College Cork - National University of Ireland, Cork, Cork (IE)
(72) Inventor: O'BRIEN, Shane Anthony, Mallow, County Cork (IE); KELLY, Patrick, Vincent, Cork (IE)
(74) Representative: Weldon, Michael James
(86) International application number: PCT/IE2002/000166
(87) International publication number: WO 2003/048822

(56) References cited:
- EP-A- 0 574 352
- WO-A-01/53385
- DE-A- 19 949 383
- US-A- 6 025 410
- US-A- 6 114 090
- US-B1- 6 306 563
- US-B1- 6 314 225
- COUDRAY P ET AL: "Ultraviolet light imprinted sol-gel silica glass waveguide devices on silicon" OPTICS COMMUNICATIONS, NORTH-HOLLAND PUBLISHING CO. AMSTERDAM, NL, vol. 128, no. 1, 1 July 1996 (1996-07-01), pages 19-22, XP004018500 ISSN: 0030-4018 cited in the application

## Description

### INTRODUCTION

### Field of the Invention

The invention relates to production of waveguides, particularly multi-layer planar waveguides. Such waveguides may be used in production of passive components such as deflectors, wavelength filters, couplers, and mode converters.

### Prior Art Discussion

In the area of sol-gel derived waveguide fabrication there are currently two main production methods, namely (a) a process which involves deposition, etching and patterning to produce the guiding regions and subsequent deposition of a cladding layer, and (b) a photopatterning or lithography approach.

The method (a) involving patterning and etching, while reasonably effective, is also very labour intensive and time-consuming, as a large number of steps are required for processing. It is for this reason that much current research is concerned with photopatterning or even photolithographic writing of waveguiding channels into sol-gel films or monoliths, which are made photosensitive by the addition of photoinitiators or photosensitisers to the sol-gel reaction mixture.

Use of photoinitiators in conjunction with sol-gel processing has been described by Popall, Schulz and Schmidt in US5360834, a process for photoinitiated control of inorganic network formation using sol-gel materials. In 1996, such technology was used by Coudray et al to produce waveguides by photopatterning methods in a methacrylate functionalised silica-zirconia sol-gel system [2]. The sol-gel glass material employed was synthesised by hydrolysis-polycondensation of methacryloxypropyl trimethoxysilane (MAPTMS), methacrylic acid and zirconium isopropoxide. HCl solution was added as a catalyst and Irgacure 184 (CIBA) was included as a photoinitiator. Deposited sol-gel materials were baked at 90°C for 30 minutes, exposed to UV radiation through a mask for 4 hours and finally post-baked at 100°C for 1 hour. The exposed areas undergo densification and an increase in refractive index results, thereby forming the guiding region of the waveguide.

In this process, it appears that photo-polymerisation and densification only occur to a depth of approximately 3.5µm.

This group has also published work relating to the production of erbium doped acrylate functionalised silica waveguides [3]. This employs similar methods and principles as used in the MAPTMS prior art described above. A difference is the use of another sol-gel precursor, but which has similar chemical properties and chemical reactivity to MAPTMS.

US 6 306 563 [4], which describes a method for producing organic optical waveguides by photo-patterning, requires a photoinitiator additive.

A problem with the prior art approaches to formation of a waveguide by exposure of a sol-gel guiding layer to UV light has been the requirement for a photoinitiator. This has tended to cause the exposed guiding layer to swell and/or become fragile. They are thus not suitable for subsequent application of a cladding layer with a desired consistent interface. Where the cladding layer is in place before exposure, the interface between the guiding layer and the cladding layer may be damaged.

In more detail, a problem with this existing technology is that when used to produce planar, multi-layer devices, such as three-layer devices consisting of buffer, guiding and cladding layers, un-reacted photoinitiator material resides within part of the waveguide cladding (i.e. - photoinitiator remains in the regions of guiding layer that have not been exposed to UV radiation). This photoinitiator, which is by nature an unstable chemical species, may undergo thermal decomposition, for example during subsequent device processing, resulting in cross-linking and densification of portions of the cladding. Such behaviour would result in the loss of the refractive index difference between the core and cladding materials that is necessary for waveguiding to take place.

Another disadvantage of the use of photo-initiators in sol-gels is that portions of the sol-gel that are exposed to light bloat or swell and become brittle. The deformed material may also contain voids, which would greatly increase the optical losses of the guiding core material.

The invention addresses this problem.

### References:

[1] M. Popall, J. Schultz, H.Schmidt, US Patent 1994, US 5360834
[2] P. Coudray, J. Chisham, A- Malek Tabrizi, *Optics Communications,* 128 (1996) 1
[3] P. Etienne, P. Coudray, J. Porque, Y. Moreau, *Optics Communications,* 174 (2000) 413
[4] B. Xu et al, US Patent 2001, US 6 306 563

### SUMMARY OF THE INVENTION

According to the invention, there is provided a method of producing a planar waveguide as set out in claim 1.

In one embodiment, the wavelength is approximately 222nm.

In one embodiment, the intensity is approximately 75 mW/cm².

In another embodiment, the guiding layer material comprises components in the acrylate functional group.

In a further embodiment, the guiding layer material comprises components in the methacrylate functional group.

In one embodiment, the guiding layer material comprises methacryloxymethyltriethoxysilate hydrolysed with dilute HCl.

In another embodiment, the guiding layer also comprises zirconium isopropoxide as a refractive index modifier, the volume being chosen according to the target refractive index.

In a further embodiment, the zirconium isopropoxide is reacted with methacrylic acid.

In one embodiment, the method comprises the further steps of depositing a buffer layer on a substrate, and subsequently depositing the guiding layer on the buffer layer.

In another embodiment, the guiding layer is treated after deposition on the buffer layer.

In a further embodiment, the method comprises the further step of depositing a cladding layer over the guiding layer.

In one embodiment, the cladding layer is deposited after treatment of the guiding layer.

In another embodiment, the buffer layer material is prepared by mixing Methyltrimethoxysilane (MTMOS) and Tetraethoxysilane (TEOS).

In a further embodiment, the method comprises the further step of adding dilute HCL as a condensation catalyst, and adding Diphenyl-dimethoxysilane (DPDMS) as a refractive index modifier to tune the refractive index of the buffer layer to a desired value.

In one embodiment, the guiding layer material is prepared in the same manner as the buffer layer material.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagrammatic cross-sectional view of a waveguide; and
Fig. 2 is a flow diagram illustrating a waveguide production method of the invention.

### Description of the Embodiments

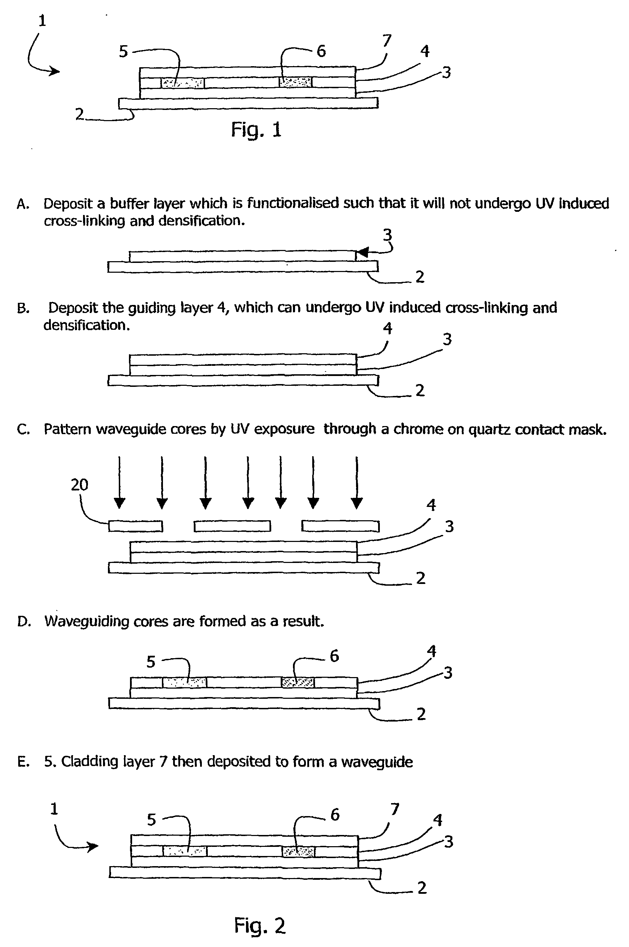

Referring to Fig. 1 a planar waveguide 1 is formed on a Silicon wafer substrate 2. The waveguide 1 comprises a buffer layer 3 applied directly over the substrate 2. A guiding layer 4 is applied over the buffer layer 3, and it comprises two guiding cores 5 and 6 for transmission of radiation. The cores 5 and 6 are formed by selective crosslinking and densification of sol-gel material of the guiding layer 4, the core material having a greater refractive index than the surrounding material. Finally, the waveguide 1 comprises a cladding layer 7 over the guiding layer 4.

In use, radiation of a desired wavelength is propagated through the cores 5 and 6 by total internal reflection arising from the interfaces between the cores 5 and 6 and the surrounding layers 3 and 7 and non-densified guiding layer sol-gel.

The layer thicknesses are:-
buffer layer: 7 microns
guiding layer: 20 microns
cladding layer: 7 microns

Both the buffer and cladding layers are of a composition that does not contain functional groups which may undergo photo-induced condensation reactions, that would result in cross-linking, densification and an increase in refractive index.

The buffer and cladding layers are of the same material, prepared as follows:-
Methyltrimethoxysilane (MTMOS) and Tetraethoxysilane (TEOS) are mixed (ratio 2:1) and stirred for 1 hour. Dilute HCl is then added as a condensation catalyst. Diphenyl-dimethoxysilane (DPDMS) is added as a refractive index modifier. The DPDMS content can be varied, resulting in a buffer/cladding material of tunable refractive index.

The guiding layer 4 material composition is prepared as follows:-
Methacryloxymethyltriethoxysilane is hydrolysed with dilute HCl. Zirconium isopropoxide (refractive index modifier) is reacted with methacrylic acid in a separate container. As with the buffer/cladding layer sol-gel mixture, the zirconium content of the gel can be varied to yield a guiding layer material of tunable refractive index. The two solutions are then mixed and stirred for 1 hour. Water is then added and the mixture is stirred for 1 hour. The thickness can be set as desired by choice of number of depositions of the sol-gel.

Referring to Fig. 2, to fabricate the waveguide 1, the buffer layer sol-gel material is spin or dip coated in step A onto the substrate 2. It is then dried in an oven at 90°C for 1 hour.

The guiding layer 4 material is then deposited and dried at 100°C for 1 hour in step B. The guiding layer material contains components with functional groups which can undergo photo-induced condensation reactions resulting in cross-linking and densification. These functional groups are in this embodiment methacrylate groups.

Alternatively, acrylate groups may be used. When dry, a chrome on quartz photolithography mask 20 is placed on the sample in step C and in step D the exposed areas of the guiding layer 4 are exposed to intense excimer-lamp output at a wavelength of 222nm and intensity of 75 mW/cm² on the sample surface.

The cladding layer 7 is then deposited in step E. This acts as the upper cladding layer of the waveguide - i.e. it prevents light leakage from the top of the waveguide. The cladding layer 7 is then dried at 100°C for 2 hours.

Regarding choice of optical parameter values, the following are the preferred ranges:-
Lamp wavelength: 172 to 308 nm, most preferably 172 - 254 nm, and
Lamp intensity: 10 mW/cm² to 100 mW/cm², and most preferably 50 - 80 mW/cm² at the sample surface.

It is also possible to pattern guiding cores through the cladding layer, using high power excimer lamp radiation at 222nm, to produce a waveguide, since the cladding and buffer layers will not undergo light-induced densification and refractive index changes.

It has been found that use of a narrow frequency range (or better still a single frequency such as 222nm) and a high intensity achieve the required core densification in the guiding layer material. This avoids the need for photo-initiator additives.

More particularly, it has been demonstrated, that it is possible to achieve densification and a corresponding increase in refractive index (Δn) in methacrylate functionalised sol-gel materials by using high power excimer-lamp radiation at 222nm in the absence of photoinitiator additives in the sol-gel system. In one representative experiment, Δn = 0.0077 was obtained after 5 minutes of irradiation at 222nm within an intensity of 75 mW/cm². Such a change in refractive index meets the requirements of both single and multi-mode waveguide fabrication.

It will be appreciated that because additives are not used in the guiding layer formulation, the prior problem of unconsumed unstable photo-initiator materials remaining in the cladding portion of the waveguide does not arise. Also, the invention avoids the problem of sol-gel materials containing photo-initiator additives swelling when exposed to light. Such swelled material would be brittle and fragment in contact with solvent or other sol-gel material.

Therefore, the stability of material properties of the sol-gel waveguide is greatly enhanced. The device produced by this method will be more robust and will consequently have a much longer working lifetime than multi-layer planar waveguides produced by prior art methods.

The invention is not limited to the embodiments described but may be varied in construction and detail.

## Claims

1. A method of producing a planar waveguide comprising the steps of selectively treating parts of a guiding layer to form a densified core in the guiding layer for propagation of radiation, wherein the guiding layer is treated by exposure to photo-patterning radiation, **characterized in that**
the guiding layer material and the photo-patterning radiation are chosen such that the core is densified without requirement for a photo-initiator additive in the guiding layer material, the photo-patterning radiation is generated by an excimer lamp, the photo-patterning radiation has a wavelength is in the range of 172nm to 254nm, and the photo-patterning radiation intensity is in the range of 50 mW/cm² to 80 mW/cm² at the guiding layer exposed surface.

2. A method as claimed in claim 1, wherein the wavelength is approximately 222nm.

3. A method as claimed in claims 1 or 2, wherein the intensity is approximately 75 mW/cm².

4. A method as claimed in any preceding claim, wherein the guiding layer material comprises components in the acrylate functional group.

5. A method as claimed in any preceding claim, wherein the guiding layer material comprises components in the methacrylate functional group.

6. A method as claimed in claim 5, wherein the guiding layer material comprises methacryloxymethyltriethoxysilate hydrolysed with dilute HCl.

7. A method as claimed in claim 6, wherein the guiding layer also comprises zirconium isopropoxide as a refractive index modifier, the volume being chosen according to the target refractive index.

8. A method as claimed in claim 7, wherein the zirconium isopropoxide is reacted with methacrylic acid.

9. A method as claimed in any preceding claim, comprising the further steps of depositing a buffer layer on a substrate, and subsequently depositing the guiding layer on the buffer layer.

10. A method as claimed in claim 9, wherein the guiding layer is treated after deposition on the buffer layer.

11. A method as claimed in claims 9 or 10, comprising the further step of depositing a cladding layer over the guiding layer.

12. A method as claimed in claim 11, wherein the cladding layer is deposited after treatment of the guiding layer.

13. A method as claimed in any of claims 9 to 12, wherein the buffer layer material is prepared by mixing Methyltrimethoxysilane and Tetraethoxysilane.

14. A method as claimed in claim 13, comprising the further step of adding dilute HCL as a condensation catalyst, and adding Diphenyl-dirnethoxysilane) as a refractive index modifier to tune the refractive index of the buffer layer to a desired value.

15. A method as claimed in claims 13 or 14, wherein the guiding layer material is prepared in the same manner as the buffer layer material.

## Revendications

1. Un procédé pour produire un guide d'ondes plan comprenant les opérations de traitement sélectif des parties d'une couche de guidage pour former un noyau densifié dans la couche de guidage pour la propagation de rayonnement, où la couche de guidage est traitée par exposition à un rayonnement de photomodélisation, **caractérisé par** les points suivants :
le matériau de la couche de guidage et le rayonnement de photomodélisation sont choisis de telle façon que le noyau soit densifié sans recours à un additif photo-initiateur dans le matériau de la couche de guidage, le rayonnement de photomodélisation est généré par une lampe excimère, le rayonnement de photomodélisation possède une longueur d'onde qui se situe dans la fourchette de 172 à 254 nm et l'intensité du rayonnement de photomodélisation se situe dans la fourchette de 50 à 80 mW/cm² à la surface exposée de la couche de guidage.

2. Un procédé selon la Revendication 1, où la longueur d'onde est approximativement de 222 nm.

3. Un procédé selon la Revendication 1 ou 2, où l'intensité est approximativement de 75 mW/cm².

4. Un procédé selon l'une quelconque des Revendications précédentes, où le matériau de la couche de guidage comprend des composants du groupe fonctionnel des acrylates.

5. Un procédé selon l'une quelconque des Revendications précédentes, où le matériau de la couche de guidage comprend des composants du groupe fonctionnel des méthacrylates.

6. Un procédé selon la Revendication 5, où le matériau de la couche de guidage comprend du méthacryloxyméthyltriéthoxylate hydrolysé avec du HCl dilué.

7. Un procédé selon la Revendication 6, où la couche de guidage comprend également de l'isopropoxyde de zirconium en tant que modificateur de l'indice de réfraction, son volume étant choisi en fonction de l'indice de réfraction cible.

8. Un procédé selon la Revendication 7, où l'on fait réagir l'isopropoxyde de zirconium avec de l'acide méthacrylique.

9. Un procédé selon l'une quelconque des Revendications précédentes comprenant les opérations complémentaires de dépôt d'une couche tampon sur un substrat et, subséquemment, de dépôt de la couche de guidage sur la couche tampon.

10. Un procédé selon la Revendication 9, où la couche de guidage est traitée après dépôt sur la couche tampon.

11. Un procédé selon la Revendication 9 ou 10 comprenant en outre l'opération de dépôt d'une couche de revêtement par dessus la couche de guidage.

12. Un procédé selon la Revendication 11 où la couche de revêtement est déposée après traitement de la couche de guidage.

13. Un procédé selon l'une quelconque des Revendications 9 à 12 où le matériau de la couche tampon est préparée en mélangeant du méthyltriméthoxysilane et du tétraéthoxysilane.

14. Un procédé selon la Revendication 13 comprenant en outre l'opération d'ajout de HCL dilué en tant que catalyseur de condensation et l'ajout de diphényl-diméthoxysilane en tant que modificateur d'indice de réfraction pour régler l'indice de réfraction de la couche tampon sur une valeur souhaitée.

15. Un procédé selon la Revendication 13 ou 14 où le matériau de la couche de guidage est préparé de la même manière que le matériau de la couche tampon.

## Patentansprüche

1. Verfahren zur Herstllung eines planaren Wellenleiters, das die Schritte des selektiven Behandelns von Teilen einer Führungsschicht zum Bilden eines verdichteten Kerns in der Führungsschicht zur Ausbreitung von Strahlung umfasst, wobei die Führungsschicht durch Belichtung mit Fotostrukturierungsstrahlung behandelt wird,
**dadurch gekennzeichnet, dass**
das Führungsschichtmaterial und die Fotostrukturierungsstrahlung so gewählt werden, dass der Kern verdichtet wird, ohne Notwendigkeit für einen Fotoinitatorzusatz in dem Führungsschichtmaterial, wobei die Fotostrukturierungsstrahlung durch eine Excimer-Lampe erzeugt wird, die Fotostrukturierungsstrahlung eine Wellenlänge im Bereich von 172 nm bis 254 nm hat und die Intensität der Fotostrukturierungsstrahlung im Bereich von 50 mW/cm² bis 80 mW/cm² an der exponierten Oberfläche der Führungsschicht liegt.

2. Verfahren nach Anspruch 1, wobei die Wellenlänge etwa 222 nm beträgt.

3. Verfahren nach Anspruch 1 oder 2, wobei die Intensität etwa 75 mW/cm² beträgt.

4. Verfahren nach einem der vorherigen Ansprüche, wobei das Führungsschichtmaterial Komponenten in der Acrylatfunktionsgruppe umfasst.

5. Verfahren nach einem der vorherigen Ansprüche, wobei das Führungsschichtmaterial Komponenten in der Methacrylatfunktionsgruppe umfasst.

6. Verfahren nach Anspruch 5, wobei das Führungsschichtmaterial mit verdünntem HCl hydrolysiertes Methacryloxymethyltriethoxysilat umfasst.

7. Verfahren nach Anspruch 6, wobei das Führungsschichtmaterial auch Zirkoniumisopropoxid als Brechungsindexveränderer umfasst, wobei das Volumen gemäß dem Zielbrechungsindex gewählt wird.

8. Verfahren nach Anspruch 7, wobei das Zirkoniumisopropoxid mit Methacrylsäure reagiert wird.

9. Verfahren nach einem der vorherigen Ansprüche, das die weiteren Schritte des Aufbringens einer Pufferschicht auf ein Substrat und des nachfolgenden Aufbringens der Führungsschicht auf die Pufferschicht umfasst.

10. Verfahren nach Anspruch 9, wobei die Führungsschicht nach dem Aufbringen auf die Pufferschicht behandelt wird.

11. Verfahren nach Anspruch 9 oder 10, das den weiteren Schritt des Aufbringens einer Einkapselungsschicht über der Führungsschicht umfasst.

12. Verfahren nach Anspruch 11, wobei die Einkapselungsschicht nach der Behandlung der Führungsschicht aufgebracht wird.

13. Verfahren nach einem der Ansprüche 9 bis 12, bei dem das Pufferschichtmaterial durch Mischen von Methyltrimethoxysilan und Tetraethoxysilan hergestellt wird.

14. Verfahren nach Anspruch 13, das den weiteren Schritt des Zugebens von verdünntem HCL als Kondensationskatalysator und des Zugebens von Diphenyldimethoxysilan als Brechungsindexveränderer umfasst, um den Brechungsindex der Pufferschicht auf einen gewünschten Wert einzustellen.

15. Verfahren nach Anspruch 13 oder 14, wobei das Führungsschichtmaterial in derselben Weise hergestellt wird wie das Pufferschichtmaterial.
